(19) Europäisches Patentamt
European Patent Office
Office européen des brevets

(11) Publication number : 0 459 951 A2

(12) # EUROPEAN PATENT APPLICATION

(21) Application number : 91810389.6

(22) Date of filing : 22.05.91

(51) Int. Cl.$^5$ : C08L 63/00, C08G 59/32, C08G 59/58, C08K 3/02, C08K 5/5333, C08K 7/20

(30) Priority : 30.05.90 US 530689

(43) Date of publication of application : 04.12.91 Bulletin 91/49

(84) Designated Contracting States : DE ES FR GB IT NL SE

(71) Applicant : CIBA-GEIGY AG
Klybeckstrasse 141
CH-4002 Basel (CH)

(72) Inventor : Behm, Dean Tallak
2682 Gemini Drive
Lake Orion, MI 48360 (US)

(54) **Char forming nonhalogenated flame retardant epoxy composition.**

(57) The present invention relates to a one component epoxy resin composition comprising :
a) a multifunctional epoxide component,
b) a hardener obtained by the reaction of approximately equimolar proportions of an anhydride selected from the group consisting of phthalic anhydride, hexahydrophthalic anhydride, tetrahydrophthalic anhydride, methyl tetrahydrophthalic anhydride, polyazelaic anhydride, succinic anhydride and dodecenylsuccinic anhydride with polyamine selected from the group consisting of ethylene diamine, diethylene triamine, triethylene tetramine, 1,3-diaminopropane, 1,6-diaminohexane, imino bis(propylamine) and methyl imino bis(propylamine) and
c) one or more nonhalogenated flame retardants.

EP 0 459 951 A2

The present invention relates to char forming nonhalogenated flame retardant epoxy compositions.

Epoxy resins have traditionally been made flame retardant through the use of halogenated additives or resins. For example, it is known to use bromine-containing organic compounds as flame retardants in polymer systems. These known bromine-containing flame retardants are, conventionally, brominated aromatic or cycloaliphatic hydrocarbons, phenols, ethers or polyols. These compounds are generally used in conjunction with a synergist, in particular antimony oxide, in order that lower levels of the bromine-containing compound can be employed, while maintaining a satisfactory level of flame retardant activity.

Due to increasing restrictions on the flammability and toxicity of materials, for example in the production of aircraft interiors, there is a need for nonhalogenated flame retardant epoxy compositions as halogenated flame retardant epoxy compositions produce toxic fumes upon ignition. Flame retardancy of epoxy systems is possible with an anhydride cure and flame retardant additive, but without char formation. Char formation is recognized as an important factor in imparting flame retardancy.

Surprisingly, the char forming nonhalogenated flame retardant epoxy compositions of the present invention comprising a multifunctional epoxide component, a modified polyamide hardener and one or more nonhalogenated flame retardants provide epoxy systems with improved flame retardancy without the addition of traditional halogenated flame retardants and result in char formation upon ignition. The modified polyamide hardener contributes to the flame retardancy by forming an intumescent char when an epoxy system containing it in combination with a flame retardant is ignited. The modified polyamide hardener allows for a one-component room temperature stable system, in addition to being flame retardant.

Epoxy systems containing only the modified polyamide hardener and no flame retardant exhibits no flame retardancy. Therefore, there appears to be a nitrogen-phosphorus synergism which is responsible for the flame retardancy of the systems. Flame retardancy and some char formation is possible with an epoxy system containing dicyanodiamide and ammonium phosphate but without the heavy char formation seen with the modified polyamide hardener of the present invention.

Aliphatic polyamines, such as diethylenetriamine and triethylenetetramine have been used to provide char formation in two part epoxy systems, but such are not suitable in one part epoxy systems.

Accordingly, it is a primary object of the present invention to provide a one component char forming epoxy system without the use of halogenated flame retardants.

A further object of the present invention is to provide a one-component room temperature stable epoxy system.

The present invention relates to a one component epoxy resin composition comprising:

a) a multifunctional epoxide component,

b) a hardener obtained by the reaction of approximately equimolar proportions of an anhydride selected from the group consisting of phthalic anhydride, hexahydrophthalic anhydride, tetrahydrophthalic anhydride, methyl tetrahydrophthalic anhydride, polyazelaic anhydride, succinic anhydride and dodecenylsuccinic anhydride with polyamine selected from the group consisting of ethylene diamine, diethylene triamine, triethylene tetramine, 1,3-diaminopropane, 1,6-diaminohexane, imino bis(propylamine) and methyl imino bis(propylamine) and

c) one or more nonhalogenated flame retardants.

The multifunctional epoxide component can be selected from a broad range of aliphatic and aromatic epoxies having a functionality of at least two and comprises one or more epoxy resins. Typical materials include diglycidyl ether of bisphenol A, epoxy phenol novolacs, 1,4-butane diol diglycidyl ether, epoxy cresol novolacs, trimethylolpropane triglycidyl ether, triglycidyl para-amino phenol, triglycidyl tris(p-hydroxyphenyl)methane, tetraglycidyl-1,1,2,2 tetrakis (p-hydroxyphenyl)ethane, vinyl cyclohexene dioxide, $N,N,N^1,N^1$-tetraglycidyl-4,$4^1$ methylene bis-benzeneamine, $N,N,N^1N^1$-tetraglycidyl metaxylene diamine, diglycidyl aniline, resorcinol diglycidyl ether, the diglycidyl ethers of catechol, hydroquinone, and the like, diglycidyl ortho-toluidine, diglycidyl isophthalate, bisphenol F and S epoxy resins, triglycidyl isocyanurate, epoxidized hydantoin resin, and $N,N,N^1,N^1$-tetraglycidyl 1,3 bis-amino-methylcyclohexane. The various ethers may be substituted on the respective phenyl rings by such non-reactive substituents as alkyl, halogen, and the like.

Preferred components correspond to

(a) 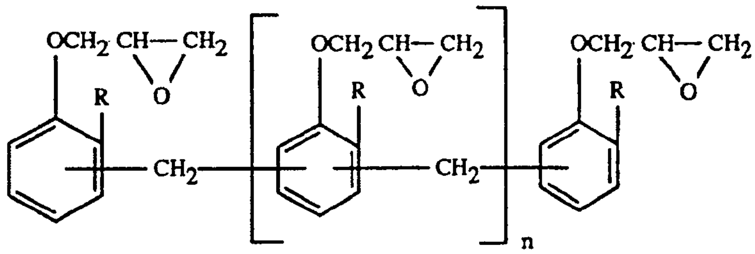

wherein R is hydrogen or methyl, and n is 0.2-3.4. These components are exemplified by the epoxidation products of cresol novolacs and phenol novolacs of varying molecular weight. The preparation of such materials is well-known in the art.

(b) diglycidyl ethers of bisphenols corresponding to the formula

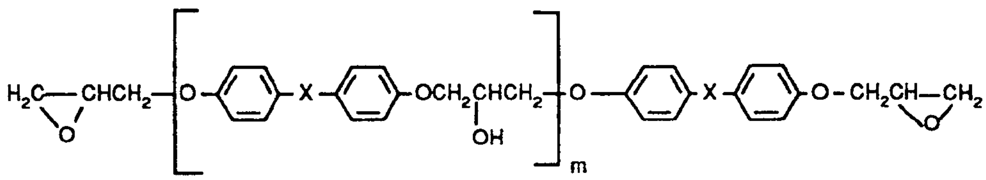

wherein m is 0-50 and X is $-CH_2-$,

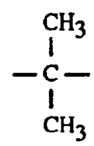

or

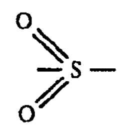

.

These represent, respectively, bisphenols F, A and S.

(c) 1,4-butanediol diglycidyl ether.

The multifunctional epoxide component can be used in the composition of the present invention in an amount of from about 40 to about 73% by weight, preferably from about 48 to about 65% by weight.

The hardener is a product obtained by the reaction of approximately equimolar proportions of an anhydride selected from the group consisting of phthalic anhydride, hexahydrophthalic anhydride, tetrahydrophthalic anhydride, methyl tetrahydrophthalic anhydride, polyazelaic anhydride, succinic anhydride and dodecenylsuccinic anhydride with a polyamine selected from the group consisting of ethylene diamine, diethylene triamine, triethylene tetramine, 1,3-diaminopropane, 1,6-diaminohexane, imino bis(propylamine) and methyl imino bis(propylamine) at a temperature of from about 50°C to about 160°C in an non-aqueous medium.

Preferably, the hardener is a product obtained as set forth hereinabove wherein the anhydride is phthalic anhydride and the amine is diethylene triamine. The preparation of such materials is described in U.S. Patent No. 3,639,657, which is hereby incorporated by reference.

The hardener can be used in the composition of the present invention in an amount ranging from about 21 to about 45 parts per hundred, preferably about 22 to about 33 parts per hundred based on the multifunctional epoxide component.

Suitable nonhalogenated flame retardants are the oxides, sulphides, sulphates, and borates of tin, iron, molybdenum, zinc and antimony, e.g. tin oxide, iron oxide, molybdenum oxide, zinc oxide, antimony oxide and zinc borate; phosphorus-containing esters and salts e.g. trialkyl and triarylphosphates, alkylarylphosphates and ammonium polyphosphates; metal hydrates, especially hydrated alumina; and the dehydropolymers of compounds of mono-, di- or tri-substituted benzene, the substituents being a $C_5$- and/or $C_6$-cycloaliphatic hydrocarbon, especially 1,1-diphenyl-bicyclohexyl or 1,1-diphenylbicyclopentyl. Preferred nonhalogenated flame retardants are ammonium polyphosphate, dimethyl methyl phosphonate, triarylphosphate, and cyclic phosphonate esters, most preferably, ammonium polyphosphate and encapsulated ammonium polyphosphate.

The flame retardant is conveniently employed in the composition of the present invention in an amount within the range of from about 8 to about 25% by weight, preferably about 10 to about 18% by weight.

The composition of the present invention may additionally contain additional latent curing agents such as dicyandiamide; ANCAMINE® 2014AS, a modified polyamide from Pacific Anchor, MMB 2074, phenol

novolac/pentamethyl diethylenetriamine from CIBA-GEIGY Corporation and the like. The preferred additional latent curing agent is dicyandiamide.

When used, the amount of said latent curing agent is from about 4 to about 13 parts per hundred, preferably about 7 to about 10 parts per hundred based on the multifunctional epoxide component and the amount of hardener component (b) is about 4 to about 13 parts per hundred, preferably about 7 to about 10 parts per hundred based on the multifunctional epoxide component.

The compositions of the invention may also contain other conventional modifiers such as extenders, fillers and reinforcing agents, pigments, dyestuffs, organic solvents, plasticizers, tackifiers, rubbers, diluents, and the like. As extenders, reinforcing agents, fillers and pigments which can be employed in the compositions according to the invention there may be mentioned, for example: glass fibers, glass balloons, boron fibers, carbon fibers, cellulose, polyethylene powder, polypropylene powder, mica, asbestos, quartz powder, gypsum, antimony trioxide, bentones, talc, silica aerogel ("Aerosil"), fumed silica, lithopone, barite, calcium carbonate, titanium dioxide, carbon black, graphite, iron oxide, or metal powders such as aluminum powder or iron powder. The preferred fillers are glass balloons and fumed silica. It is also possible to add other usual additives, for example, agents for conferring thixotropy, flow control agents such as silicones, cellulose acetate butyrate, polyvinyl butyral, stearates and the like.

A vertical type high-speed agitator, kneading machine, roll machine, ball mill or any other suitable mixing and agitating machine may be used for dispersion of the components of the composition of the present invention.

The cured epoxy compositions of the present invention exhibit a compression strength at 25°C of greater than 6500 psi.

The epoxy compositions of the present invention are particularly useful for the preparation of structures for the aerospace industry.

The following examples will further illustrate the embodiments of the instant invention.

Example 1

This example illustrates the preparation of a typical composition of the present invention. The ingredients are listed in Table 1.

Table 1
Epoxy Resin Composition

| Ingredient | Content (wt %) |
|---|---|
| Bisphenol F epoxy resin (PY306 from CIBA-GEIGY Corporation) | 51.45% |
| Reaction product of phthalic anhydride and diethylene-triamine (HT 9506 from CIBA-GEIGY Corporation) | 14.42% |
| Ammonium polyphosphate | 12.50% |
| Dimethyl methyl phosphonate (DMMP) | 8.33% |
| SCOTCHLITE® Glass Balloons-A20/1000 from 3M Co. | 13.30% |

Initially, 200 g of the epoxy resin was blended with the hardener, ammonium polyphosphate and dimethyl methyl phosphonate. The remaining epoxy resin was added and blended using the Ross LOM Double Planetary mixer for 15 minutes. The glass balloons were added and the mixture blended for an additional 15 minutes. The specific gravity of the resulting composition was 0.68 g/ml and the press flow was 100 g/min which was measured on a Castor Severs Extrusion Rheometer at 80 psi and 25°C with a 125 ml orifice.

Examples 2 and 3

These examples illustrate the preparation of additional compositions of the present invention and an evaluation of the flame retardancy of the composition. The ingredients are listed in Table 2.

Table 2
Epoxy Resin Composition

| Ingredient | Example 2 | Example 3 |
|---|---|---|
| Bisphenol F epoxy resin (PY306 from CIBA-GEIGY Corporation) | 51.45g | 46.30 g |
| Epoxy phenol novolac resin (EPN 1138 from CIBA-GEIGY Corporation) | - | 5.15 g |
| Reaction product of phthalic anhydride and diethylene-triamine (HT 939 from CIBA-GEIGY Corporation) | 14.42 g | 14.42 g |
| Ammonium polyphosphate | 8.33 g | 8.33 g |
| DMMP | 12.50 g | 12.50 g |
| SCOTCHLITE® Glass Balloons-A20/1000 from 3M Company | 13.30 g | 13.30 g |
| CABOSIL® fumed silica from Cabot Corporation | 0.50 g | 0.50 g |

For example 2, the epoxy resin and DMMP were blended together. HT 939 was added and dispersed. The ammonium polyphosphate was next added and dispersed. Then, the fumed silica was added and blended. Lastly, the glass balloons were added and blended.

For example 3, the epoxy resins were heat blended at 70°C. The blend was allowed to cool to room temperature and the DMMP was next added and blended. HT 939 was then added and dispersed, followed by the ammonium polyphosphate and then the silica fume was blended in. Lastly, the glass beads were added and blended.

The resulting compositions were pressed between 2 pieces of glass precoated with a release agent (MONO-COAT E205 from Chem-Trend Incorporated) to 0.3175 cm thickness and heated 1.5 hours at 121°C. The samples were then removed from the glass plates, cut and burned according to Federal Aviation Requirement 25.853. The results are provided in Table 3.

Table 3

| Example | Length | Burn Time | Char Characteristics Burn Length | Smoke |
|---|---|---|---|---|
| 2 | 22.86 cm | 0 sec | 6.99 cm | intumescent char; medium grey smoke |
| 2 | 20.32 cm | 0 sec | 8.26 cm | intumescent char; medium grey smoke |
| 3 | 22.86 cm | 0 sec | 8.26 cm | intumescent char; medium grey smoke |
| 3 | 18.42 cm | 0 sec | 8.26 cm | intumescent char; medium grey smoke |
| 3 | 18.42 cm | 0 sec | 8.26 cm | intumescent char; medium grey smoke |

Examples 4 and 5

The procedure of Example 2 was repeated utilizing the following components:

Table 4
Epoxy Resin Composition

| Ingredient | Example 4 | Example 5 |
|---|---|---|
| Bisphenol A epoxy resin (GY 6004 from CIBA-GEIGY Corporation) | 38.95 g | - |
| Bisphenol A epoxy resin (TACTIX 123® from Dow Chemical Co.) | | 38.95 g |
| HT 9506 | 7.21 g | 7.21 g |
| Dicyandiamide | 7.21 g | 7.21 g |
| Ammonium polyphosphate | 12.00 g | 12.00 g |
| SCOTCHLITE® Glass Balloons-B37/2000 from 3M Company | 12.50 g | 12.50 g |
| Trimethylolpropane triglycidyl ether (HELOXY® from Hi-Tek Polymers, Inc.) | 12.50 g | 12.50 g |

The resulting compositions were de-aired and then pressed between 2 pieces of glass precoated with a release agent (MONO-COAT E205 from Chem-Trend Incorporated) to a thickness of 0.3175 cm and heated 1.5 hours at 121°C. The samples were then removed from the glass plates, cut and burned according to Federal Aviation Requirement 25.853. The results are provided in Table 5.

Table 5

| Example | Length | Burn Time | Char Characteristics Burn Length | Smoke |
|---|---|---|---|---|
| 4 | 8.89 cm | 0 sec | 8.89 cm | heavy grey |
| 4 | 8.26 cm | 1 sec | 8.26 cm | heavy grey |
| 5 | 7.62 cm | 1 sec | 7.62 cm | heavy grey |
| 5 | 8.89 cm | 0 sec | 8.89 cm | heavy grey |

Examples 6 and 7

The ingredients of the epoxy resin prepared in this example are provided in Table 6.

Table 6
Epoxy Resin composition

| Ingredient | Example 6 | Example 7 |
|---|---|---|
| PY 306 | 46.45 g | 41.45 g |
| Epoxidized para-aminophenol (MY 0510 from CIBA-GEIGY Corporation) | 5.0 g | 10.00 g |
| HT 9506 | 14.42 g | 14.42 g |
| Triarylphosphate (SANCTICIZER 154® from Monsanto) | 8.33 g | 8.33 g |
| Ammonium polyphosphate | 12.00 g | 12.00 g |
| CABOSIL® fumed silica from Cabot Corporation | 0.50 g | 0.50 g |
| SCOTCHLITE® glass beads-B37/2000 from 3M Company | 13.30 g | 13.30 g |

The epoxy resins were added together and blended. The fumed silica was then added and blended, followed by addition and dispersion of the HT 9506, the blending in of the triarylphosphate, the dispersion of the ammonium polyphosphate and lastly blending in of the glass beads.

The compositions were then cured and tested as set forth in Examples 2 and 3. The results are provided in Table 7.

Table 7

| | | | Char Characteristics | |
|---|---|---|---|---|
| Example | Length | Burn Time | Burn Length | Smoke |
| 6 | 6.35 cm | 0 sec | 6.35 cm | intumescent char; heavy grey smoke |
| 6 | 6.99 cm | 0 sec | 6.99 cm | intumescent char; heavy grey smoke |
| 7 | 6.35 cm | 0 sec | 6.35 cm | intumescent char; heavy grey smoke |
| 7 | 8.89 cm | 0 sec | 8.89 cm | intumescent char; heavy grey smoke |

**Claims**

1. A one component epoxy resin composition comprising:
   a) a multifunctional epoxide component,
   b) a hardener obtained by the reaction of approximately equimolar proportions of an anhydride selected from the group consisting of phthalic anhydride, hexahydrophthalic anhydride, tetrahydrophthalic anhydride, methyl tetrahydrophthalic anhydride, polyazelaic anhydride, succinic anhydride and dodecenylsuccinic anhydride with polyamine selected from the group consisting of ethylene diamine, diethylene tne, triethylene tetramine, 1,3-diaminopropane, 1,6-diaminohexane, imino bis(propylamine) and methyl imino bis(propylamine) and
   c) one or more nonhalogenated flame retardants.

2. A one component epoxy resin composition according to claim 1 wherein the multifunctional epoxide component comprises at least one aliphatic or aromatic epoxide having a functionality of at least two.

3. A one component epoxy resin composition according to claim 1 wherein said multifunctional epoxide component comprises at least one epoxy resin selected from the group consisting of diglycidyl ether of bisphenol A, epoxy phenol novolacs, 1,4-butane diol diglycidyl ether, epoxy cresol novolacs, trimethylolpropane triglycidyl ether, triglycidyl para-amino phenol, triglycidyl tris(p-hydroxyphenyl)methane, tetraglycidyl-1,1,2,2 tetrakis (p-hydroxyphenyl)ethane, vinyl cyclohexene dioxide, N,N,N$^1$,N$^1$-tetraglycidyl-4,4$^1$ methylene bis-benzeneamine, N,N,N$^1$N$^1$-tetraglycidyl metaxylene diamine, diglycidyl

aniline, resorcinol diglycidyl ether, the diglycidyl ethers of catechol, hydroquinone, and the like, diglycidyl ortho-toluidine, diglycidyl isophthalate, bisphenol F and S epoxy resins, triglycidyl isocyanurate, epoxidized hydantoin resin and N,N,N[1],N[1]-tetraglycidyl 1,3 bis-amino-methylcyclohexane.

**4.** A one component epoxy resin composition according to claim 1 wherein said multifunctional epoxide component comprises at least one epoxy resin selected from the group consisting of

(a) 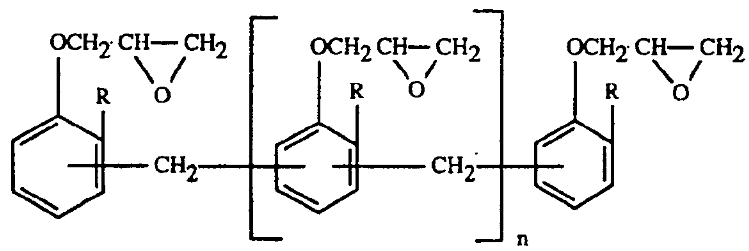

wherein R is hydrogen or methyl, and n is 0.2-3.4; and
(b) diglycidyl ethers of bisphenols corresponding to the formula

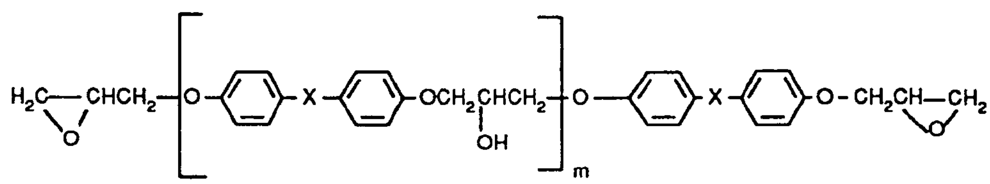

wherein m is 0-50 and X is $-CH_2-$,

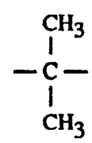 or 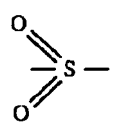 .

**5.** A one component epoxy resin composition according to claim 1 wherein the multifunctional epoxide component comprises at least one epoxy resin selected from the group consisting of bisphenol A, bisphenol F, bisphenol S, epoxy phenol novolac resin, and triglycidyl para-amino phenol resin.

**6.** A one component epoxy resin composition according to claim 1 wherein the multifunctional epoxide component is present in an amount ranging from about 40 to 73% by weight.

**7.** A one component epoxy resin composition according to claim 1 wherein the multifunctional epoxide component is present in an amount ranging from about 48 to 65% by weight.

**8.** A one component epoxy resin composition according to claim 1 wherein the hardener comprises phthalic anhydride and diethylene triamine.

**9.** A one component epoxy resin composition according to claim 1 wherein the hardener is present in an amount ranging from about 21 to 45 parts per hundred based upon the multifunctional epoxide component.

**10.** A one component epoxy resin composition according to claim 1 wherein the hardener is present in an amount ranging from about 22 to 33 parts per hundred based upon the multifunctional epoxide component.

**11.** A one component epoxy resin composition according to claim 1 wherein said nonhalogenated flame retardants are selected from the group consisting of oxides, sulphides, suphates and borates of tin, iron, molybdenum, zinc and antimony; phosphorus-containing esters and salts; metal hydrates and the dehydropolymers of compounds of mono-, di- or tri-substituted benzene, the substituents being a $C_5$- or

$C_6$-cycloaliphatic hydrocarbon.

12. A one component epoxy resin composition according to claim 1 wherein said nonhalogenated flame retardants are selected from the group consisting of tin oxide, iron oxide, molybdenum oxide, zinc oxide, antimony oxide and zinc borate, trialkylphosphate, triarylphosphates, alkylarylphosphates, ammonium polyphosphates, hydrated alumina, dehydropolymers of 1,1-diphenyl-bicyclohexyl or 1,1-diphenylbicyclopentyl substituted benzene.

13. A one component epoxy resin composition according to claim 1 wherein said nonhalogenated flame retardants are selected from the group consisting of ammonium polyphosphate, dimethyl methyl phosphonate, triarylphosphonate and cyclic phosphonate esters.

14. A one component epoxy resin composition according to claim 1 wherein said nonhalogenated flame retardants are selected from the group consisting of ammonium polyphosphate and dimethyl methyl phosphonate.

15. A one component epoxy resin composition according to claim 1 wherein said nonhalogenated flame retardants are present in an amount of from about 8 to about 25% by weight.

16. A one component epoxy resin composition according to claim 1 wherein said nonhalogenated flame retardants are present in an amount of from about 10 to 18% by weight.

17. A one component epoxy resin composition according to claim 1 further comprising an additional latent curing agent.

18. A one component epoxy resin composition according to claim 1 further comprising an additional latent curing agent selected from the group consisting of dicyandiamide and phenol novolac/pentamethyl diethylenetriamine.

19. A one component epoxy resin composition according to claim 17 wherein said additional latent curing agent is present in an amount ranging from about 4 to about 13 parts per hundred based upon the multifunctional epoxide component and said hardener is present in an amount ranging from about 4 to about 13 parts per hundred based upon the multifunctional epoxide component.

20. A one component epoxy resin composition according to claim 1 further comprising one or more fillers.